# EUROPÄISCHE PATENTSCHRIFT

(11) **EP 3 306 068 B1**
(45) Veröffentlichungstag und Bekanntmachung des Hinweises auf die Patenterteilung: **05.08.2020**
(21) Anmeldenummer: 17194036.4
(22) Anmeldetag: 29.09.2017
(51) Int. Cl.: F02K 3/06, F02C 7/04

(54) **TURBOFAN-TRIEBWERK FÜR EIN ZIVILES ÜBERSCHALLFLUGZEUG**
TURBOFAN ENGINE FOR A CIVIL SUPERSONIC AIRCRAFT
TURBINE À DOUBLE FLUX POUR UN AVION SUPERSONIQUE CIVIL

(30) Priorität: 04.10.2016 DE 102016118779
(43) Veröffentlichungstag der Anmeldung: 11.04.2018
(73) Patentinhaber: Rolls-Royce Deutschland Ltd & Co KG, 15827 Blankenfelde-Mahlow (DE)
(72) Erfinder: ROSENAU, Knut, 15827 Blankenfelde-Mahlow (DE); MCLEAVY HILL, James Robert, 15827 Blankenfelde-Mahlow (DE); ROSE, Marco, 15827 Blankenfelde-Mahlow (DE)
(74) Vertreter: Müller, Wolfram Hubertus

(56) Entgegenhaltungen:
- US-A- 4 080 785
- US-A- 4 183 211
- John F. Groeneweg: "Turbomachinery noise", NASA Technical Report 90-3052, Aeroacoustics of Flight Vehicles: Theory and practice, Volume 1: Noise sources, 31. August 1991 (1991-08-31), Seiten 151-209, XP055305710, Gefunden im Internet: URL:http://ntrs.nasa.gov/archive/nasa/casi .ntrs.nasa.gov/19920001380.pdf [gefunden am 2016-09-27]

## Beschreibung

Die Erfindung betrifft ein Turbofan-Triebwerk für ein ziviles Überschallflugzeug gemäß dem Oberbegriff des Patentanspruchs 1.

Nachdem der zivile Überschallflug mit Einstellung des Betriebs des Überschall-Passagierflugzeugs "Concorde" einen Rückschlag erlitten hatte, besteht inzwischen ein erneutes Interesse an der Entwicklung von Überschallflugzeugen für den zivilen Bereich und dementsprechend auch ein Interesse an effizienten Flugtriebwerken, die für einen Überschallbetrieb geeignet sind.

Das im Kampfflugzeug Tornado realisierte Triebwerk RB199 umfasst einen dreistufigen Fan und eine verstellbare Schubdüse mit Schubumkehrer. Verstellbare konvergentdivergente Schubdüsen sind beispielsweise aus dem Triebwerk EJ200 des Kampfflugzeugs Eurofighter bekannt. Aus der Militärtechnik bekannte Triebwerke für einen Überschallbetrieb sind im zivilen Bereich allerdings nicht einsetzbar, da die Anforderungen beispielsweise hinsichtlich Triebwerkslärm und Verbrauch nicht ausreichend sind.

Es ist bekannt, dass der Fanlärm mit zunehmendem Abstand zwischen Fanrotor und Fanstator abnimmt, stellvertretend sei Balombin, J.R., et al.: "Effect of Rotor-to-Stator Spacing on Acoustic Performance of a full-scale Fan (QF-5) for Turbofan Engine", NASA Technical Memorandum X-3101, September 1974, zitiert.

Aus der DE 2 119 495 A ist ein zweistufiger Fan mit einem ersten Fanrotor und einem zweiten Fanrotor bekannt, bei dem die Laufradschaufeln des zweiten Fanrotors sich über den Sekundärstromkanal (Nebenstromkanal) und den Primärstromkanal des Triebwerks erstrecken. Die EP 1 564 397 B1 beschreibt die Anordnung eines zweiten Fanrotors nur im Sekundärstromkanal.

John F. Groeneweg: "Turbomachinery noise", NASA Technical Report 90-3052, Aeroacoustics of Flight Vehicles: Theory and practice, Volume 1: Noise sources, 31. August 1991 (1991-08-31), Seiten 151-209, XP055305710, beschreibt auf den Seiten 196-204 Maßnahmen zur Reduzierung des Triebwerkslärms. Hierzu sind genannt die Realisierung eines möglichst großen Abstandes zwischen Rotor und Stator, eine Erhöhung der Anzahl der Rotorschaufeln und eine geeignete Einstellung des Verhältnisses Statorschaufel zu Rotorschaufel.

Aus der US 4 183 211 A und der US 4 080 785 A sind gattungsgemäße Turbofan-Triebwerke mit einem mehrstufigen Fan bekannt, bei denen die Fanrotoren sämtlicher Stufen des Fans im Eingangsstromkanal vor dessen Aufteilung in einen Primärstromkanal und einen Sekundärstromkanal angeordnet sind.

Der vorliegenden Erfindung liegt die Aufgabe zugrunde, ein für einen Überschallbetrieb geeignetes Turbofan-Triebwerk mit einer neuen Ausgestaltung des Fans bereitzustellen.

Diese Aufgabe wird durch ein Turbofan-Triebwerk mit den Merkmalen des Patentanspruchs 1 gelöst. Ausgestaltungen der Erfindung sind in den Unteransprüchen angegeben.

Danach betrachtet die Erfindung ein Turbofan-Triebwerk mit einem mehrstufigen Fan, wobei jede Stufe des mehrstufigen Fans einen Fanrotor mit Rotorschaufeln und einen Fanstator mit Statorschaufeln aufweist. Das Triebwerk bildet einen Eingangsstromkanal aus, der durch den Fanrotor der ersten Stufe des mehrstufigen Fans führt. Ein Primärstromkanal führt durch das aus Verdichter, Brennkammer und Turbine bestehende Kerntriebwerk des Turbofan-Triebwerks. Ein Sekundärstromkanal führt an dem Kerntriebwerk vorbei. Dabei teilt sich der Eingangsstromkanal hinter einem Strömungsteiler oder Splitter in den Primärstromkanal und den Sekundärstromkanal auf. Im Betrieb des Turbofan-Triebwerks wird der vom Triebwerk angesaugte Luftmassenstrom in einen primären Luftmassenstrom, der durch den Primärstromkanal strömt, und einen sekundären Luftmassenstrom, der durch den Sekundärstromkanal strömt, aufgeteilt.

Die Fanrotoren sämtlicher Stufen des Fans im Eingangsstromkanal sind vor dessen Aufteilung in den Primärstromkanal und den Sekundärstromkanal angeordnet. Dementsprechend wird der angesaugte Luftmassenstrom erst hinter der Rotorstufe der letzten Fanstufe in einen sekundären Luftmassenstrom und einen primären Luftmassenstrom aufgesplittet.

Die vorliegende Erfindung stellt somit ein Turbofan-Triebwerk mit einem kompakten mehrstufigen Fan bereit, dessen sämtliche Fanrotoren im Eingangsstromkanal vor dessen Aufteilung in den Primärstromkanal und den Sekundärstromkanal angeordnet sind. Dies erlaubt es, alle Fanrotoren in einfacher Weise mit der Antriebswelle zu verbinden. Dabei kann beispielsweise vorgesehen sein, dass die einzelnen Fanrotoren in BLISK-Bauweise ausgeführt und drehfest miteinander und mit der Antriebswelle verbunden sind.

Begriffe wie "vor", "hinter", "vordere" und "hintere" beziehen sich immer auf die Strömungsrichtung. Ein vor einem zweiten Bauteil angeordnetes erstes Bauteil ist somit stromaufwärts des zweiten Bauteils angeordnet. Das zweite Bauteil ist in diesem Fall stromabwärts des ersten Bauteils angeordnet.

Das Turbofan-Triebwerk ist beispielsweise für einen Geschwindigkeitsbereich von Ma 1,0 bis Ma 3,0, insbesondere von Ma 1,2 bis Ma 1,8 und beim Start des Flugzeugs für einen Schubbereich von 44.482 N (10.000 Ibf) bis 444.820 N (100.000 Ibf), insbesondere für einen Schubbereich von 66.723 N (15.000 Ibf) bis 133.446 N (30.000 Ibf) ausgelegt.

Gemäß einer Ausgestaltung der Erfindung gilt für mindestens einen Fanrotor oder Fanstator, dass in der radialen Strömungsmitte des Eingangsstromkanals der axiale Abstand zwischen den Schaufeln eines Fanrotors oder Fanstators und den Schaufeln des in Strömungsrichtung unmittelbar stromaufwärts angeordneten Fanstators oder Fanrotors zwischen 60% und 150%, insbesondere zwischen 80% und 130% der axialen Länge der Schaufeln des stromaufwärts angeordneten Fanstators oder Fanrotors beträgt. Sofern der mehrstufige Fan ein zweistufiger Fan ist, bedeutet dies, dass der axiale Abstand zwischen den Schaufeln der Fanstators der ersten Stufe zu den Schaufeln des Fanrotors der ersten Stufe zwischen 60% und 150%, insbesondere zwischen 80% und 130% der axialen Länge der Schaufeln des ersten Fanrotors beträgt, und/oder dass der axiale Abstand zwischen den Schaufeln der Fanrotors der zweiten Stufe zu den Schaufeln des Fanstators der ersten Stufe zwischen 60% und 150%, insbesondere zwischen 80% und 130% der axialen Länge der Schaufeln des Fanstators der ersten Stufe beträgt. Das gleiche Abstandsverhältnis gilt auch für einen dreistufigen Fan.

Die genannten Abstände sollen in der radialen Strömungsmitte des Eingangsstromkanals gelten. Diese wird durch die geometrische Mitte des als Ringkanal ausgebildeten Eingangsstromkanals gebildet, der durch die Fannabe und die äußere Strömungspfadbegrenzung begrenzt wird. Durch Betrachtung der radialen Strömungsmitte werden die Schaufeln und deren Abstand in einer definierten radialen Höhe betrachtet.

Die Erfindung realisiert damit einen großen axialen Abstand zwischen den Fanrotor- und Fanstatorschaufeln. Hierdurch wird die Entstehung von Fanlärm beschränkt. Die Erfindung sieht damit ein längliches Design des mehrstufigen Fans vor, bei dem die axialen Abstände zwischen Fanrotor und Fanstator groß gewählt sind, obwohl sämtliche Fanrotoren im Eingangsstromkanal angeordnet sind.

Um eine bessere Strömung von der ersten Fanstufe zur zweiten Fanstufe zu erreichen, befindet sich in einer weiteren Ausgestaltung der Erfindung die Blattspitze an der Einlaufkante (d.h. der axial vorderen Kante) der zweiten Rotorstufe des Fans bezogen auf die Maschinenachse zwischen 2% bis 10%, insbesondere zwischen 3% bis 6% radial weiter innen als die Blattspitze an der Einlaufkante der ersten Rotorstufe des Fans.

Eine weitere Ausgestaltung der Erfindung sieht vor, dass für mindestens eine der Stufen des Fans gilt, dass die Anzahl der Schaufeln des Fanstators dieser Stufe das zweifache bis fünffache, insbesondere das dreifache der Anzahl der Schaufeln des Fanrotors dieser Stufe plus oder minus einer Zahl m beträgt, die zwischen 1 bis 10, insbesondere zwischen 3 und 6 liegen kann, so dass die Anzahl der Schaufeln des Fanrotors und die Anzahl der Schaufeln des Fanstators nicht in einem ganzzahligen Verhältnis stehen. Für einen zweistufigen Fan bedeutet dies, dass die Anzahl der Schaufeln des Fanstators der ersten Stufe in etwa das zweifache bis fünffache, insbesondere das in etwa dreifache der Anzahl der Schaufeln des Fanrotors der ersten Stufe beträgt. Es wird dabei sicher gestellt, dass keine ganzzahligen Vielfache der Anzahl der Rotor und Statorschaufeln realisiert wird. Die Abweichung der Anzahl der Fanstatorschaufeln zum Mehrfachen der vorangehenden Fanrotorschaufeln kann dabei zwischen 1 bis 10, insbesondere zwischen 3 und 6 liegen. Durch die unterschiedliche Anzahl von Rotorschaufeln und Statorschaufeln einer Stufe werden Interferenzen zwischen den Rotoren und Statoren vermieden.

Gemäß der vorliegenden Erfindung ist vorgesehen, dass für mindestens zwei Fanstufen gilt, dass die Anzahl der Rotorschaufeln der hinteren Fanstufe um 10% bis 40%, insbesondere um 15% bis 25%, insbesondere um 20% erhöht ist gegenüber der Anzahl der Rotorschaufeln der vorderen Fanstufe. Für einen zweistufigen Fan bedeutet dies, dass die Anzahl der Rotorschaufeln der zweiten Fanstufe um 10% bis 40%, insbesondere um 15% bis 25%, insbesondere um 20% erhöht ist gegenüber der Anzahl der Rotorschaufeln der ersten Fanstufe. Eine dritte Fanstufe würde ein gleiches Anzahlverhältnis zu ihrer Vorgängerstufe aufweisen. Durch eine unterschiedliche Anzahl von Rotorschaufeln in den einzelnen Fanstufen werden akustische Interferenzen zwischen den Fanrotoren vermieden bzw. solche reduziert. Dies stellt eine weitere Maßnahme zur Lärmreduktion dar.

Die Erfindung sieht des Weiteren vor, dass für eine weitere Lärmreduktion die Anzahl der Statorschaufeln einer Fanstufe sich von der Anzahl der Rotorschaufeln dieser Stufe und von der Anzahl der Statorschaufeln und der Rotorschaufeln jeder vorangehenden Stufe unterscheidet. Hierdurch werden akustische Interferenzen reduziert bzw. vermieden.

Weiter sieht die Erfindung vor, dass der Fanrotor aus n drehfest miteinander verbundenen Rotoren in BLISK-Bauweise gebildet ist, wobei n die Anzahl der Stufen des mehrstufigen Fans angibt. Die in BLISK-Bauweise ausgeführten Fanrotoren der einzelnen Stufen sind dabei beispielsweise miteinander verschraubt oder verschweißt.

Eine weitere Ausgestaltung der Erfindung sieht vor, dass im Antriebsstrang zwischen einer Niederdruckturbine des Triebwerks und dem Fan ein Untersetzungsgetriebe vorgesehen ist, um die Drehzahl von einer schnelllaufenden Niederdruckturbine auf den mehrstufigen Fan zu untersetzen. Das Untersetzungsgetriebe ist beispielsweise als Planetengetriebe ausgebildet.

Die Statorschaufeln des Fanstators der einzelnen Stufen können grundsätzlich fest angeordnet oder alternativ drehbar ausgebildet sein. Dementsprechend sieht eine Ausgestaltung der Erfindung vor, dass für mindestens eine Fanstufe gilt, dass die Schaufeln des Fanstators um ihre radiale Achse drehbar sind. Dies kann beispielsweise mittels Verstellringen und Verstellhebeln sowie einer drehbaren Lagerung der Statorschaufeln erreicht werden.

Gemäß der vorliegenden Erfindung sind die Fanrotoren sämtlicher Stufen des Fans im Eingangsstromkanal vor dessen Aufteilung in den Primärstromkanal und den Sekundärstromkanal angeordnet. Dementsprechend sind auch bis auf die letzte Stufe sämtliche Fanstatoren der einzelnen Fanstufen im Eingangsstromkanal angeordnet. Der Fanstator der letzten Fanstufe ist gemäß einer Ausgestaltung dagegen gesplittet am Eingang des Sekundärstromkanals und am Eingang des Primärstromkanals angeordnet und bildet dort jeweils ein Leitgitter.

Das Turbofan-Triebwerk umfasst einen Triebwerkseinlauf, der für einen Überschallbetrieb geeignet und vorgesehen ist und dazu dient, die einströmende Luft auf Geschwindigkeiten unterhalb Ma 1,0 zu verzögern. Gemäß einer Ausgestaltung ist vorgesehen, dass für eine zusätzliche Lärmreduktion der Triebwerkseinlauf mit einer schallabsorbierenden Auskleidung (auch als "noise liner" bezeichnet) versehen ist.

Die Erfindung wird nachfolgend unter Bezugnahme auf die Figuren der Zeichnung anhand mehrerer Ausführungsbeispiele näher erläutert. Es zeigen:
- Figur 1: ein Ausführungsbeispiel eines Turbofan-Triebwerks mit einem zweistufigen Fan, bei dem die Fanrotoren beider Stufen im Eingangsstromkanal vor dessen Aufteilung in einen Primärstromkanal und einen Sekundärstromkanal angeordnet sind;
- Figur 2: ein Ausführungsbeispiel eines Turbofan-Triebwerks mit einem zweistufigen Fan entsprechend der Ausgestaltung der Figur 1, wobei die Schaufeln des Fanstators jeder Stufe drehbar ausgebildet sind; und
- Figur 3: ein Ausführungsbeispiel eines Turbofan-Triebwerks mit einem zweistufigen Fan entsprechend der Ausgestaltung der Figur 1, wobei das Turbofan-Triebwerk zusätzlich ein Planetengetriebe zur Reduktion der Fandrehzahl aufweist.

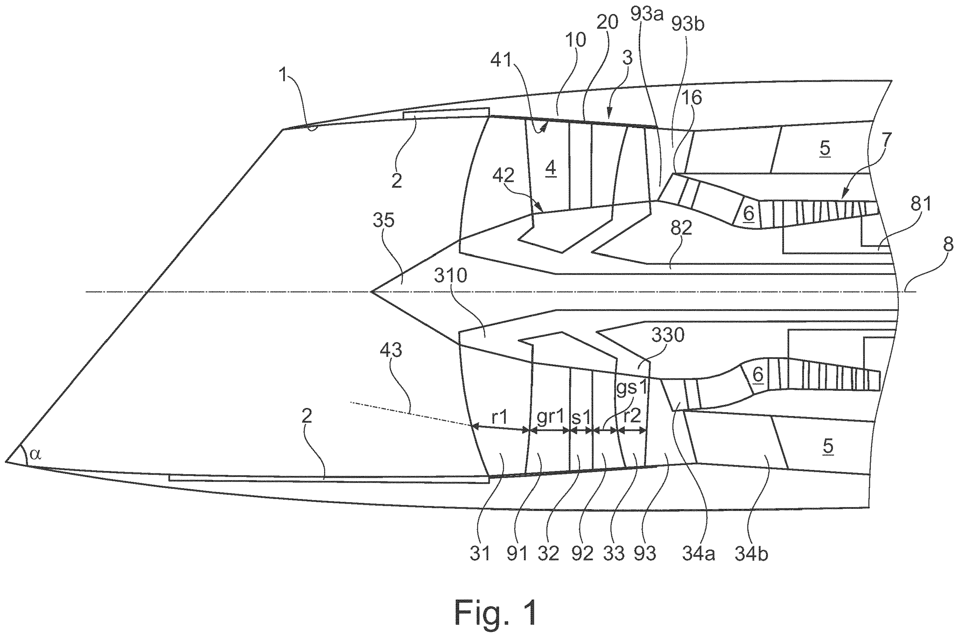

Die Figur 1 zeigt den stromaufwärtigen Teil eines Turbofan-Triebwerks für ein ziviles Überschallflugzeug. Das Turbofan-Triebwerk umfasst einen Triebwerkseinlauf 1, einen mehrstufigen Fan 3, einen Primärstromkanal 6, der durch ein Kerntriebwerk führt und einen Sekundärstromkanal 5, der an dem Kerntriebwerk vorbei führt. Der Sekundärstromkanal 5 wird auch als Nebenstromkanal oder Bypass-Kanal bezeichnet. Das Turbofan-Triebwerk umfasst eine Maschinenachse oder Triebwerksmittellinie 8. Die Maschinenachse 8 definiert eine axiale Richtung des Turbofan-Triebwerks. Eine radiale Richtung des Turbofan-Triebwerks verläuft senkrecht zur axialen Richtung.

Das Kerntriebwerk ist nur teilweise dargestellt und weist in an sich bekannter Weise einen Verdichter, eine Brennkammer und eine Turbine auf. Im dargestellten Ausführungsbeispiel umfasst der Verdichter einen Hochdruckverdichter 7. Ein Niederdruckverdichter ist durch die nabennahen Bereiche des Fanrotors 3 gebildet. Die hinter der Brennkammer (nicht dargestellt) angeordnete Turbine (nicht dargestellt) umfasst eine Hochdruckturbine und eine Niederdruckturbine. Die Hochdruckturbine treibt eine Hochdruckwelle 81 an, die die Hochdruckturbine mit dem Hochdruckverdichter 7 verbindet. Die Niederdruckturbine treibt eine Niederdruckwelle 82 an, die die Niederdruckturbine mit dem mehrstufigen Fan 3 verbindet. Das Turbofan-Triebwerk umfasst als weitere Komponenten, die in der Figur 1 nicht dargestellt sind, einen Mischer, der Luft des Sekundärstromkanals 5 und des Primärstromkanals 6 hinter dem Kerntriebwerk mischt, sowie eine Schubdüse. Das Triebwerk kann zusätzlich einen Schubumkehrer aufweisen.

Das Turbofan-Triebwerk ist in einer Triebwerksgondel 10 angeordnet. Diese ist beispielsweise über einen Pylon mit dem Flugzeugrumpf verbunden.

Der Triebwerkseinlauf 1 bildet einen Überschall-Lufteinlauf und ist dementsprechend dafür vorgesehen und geeignet, die einströmende Luft auf Geschwindigkeiten unterhalb Ma 1,0 (Ma = Mach-Zahl) zu verzögern. Der Triebwerkseinlauf ist in der Figur 1, jedoch nicht notwendigerweise, unter Ausbildung eines Winkels α angeschrägt, wobei der untere Rand gegenüber dem oberen Rand vorsteht. Dies dient dazu, im Überschallflug eine günstige Verdichtungsstosskonfiguration zu erzielen. Grundsätzlich kann der Triebwerkseinlauf jedoch auch gerade, d.h. mit einem Winkel α von 90° oder einem anderen Winkel als dargestellt ausgebildet sein.

Der Triebwerkseinlauf 1 weist eine Innenverkleidung mit einem schallabsorbierenden Material 2 auf. Dies dient einer Reduktion des Triebwerklärms.

Der Fan 3 ist als mehrstufiger Fan ausgebildet, im dargestellten Ausführungsbeispiel als zweistufiger Fan. Dementsprechend umfasst der mehrstufige Fan 3 einen ersten Fanrotor 31 und einen ersten Fanstator 32, die eine vordere Fanstufe bilden, sowie einen zweiten Fanrotor 33 und einen zweiten Fanstator 34a, 34b, die eine hintere Fanstufe bilden. Stromaufwärts ist der Fan 3 mit einem Nasenkonus 35 versehen. Die Fanrotoren 31, 33 umfassen jeweils eine Mehrzahl von Rotorschaufeln, die mit einer Fan-Scheibe 310, 330 des Fans 3 verbunden sind. Der Fanstator 32 der vorderen Fanstufe umfasst eine Mehrzahl von Statorschaufeln, die in einem schematisch dargestellten Fangehäuse 20 gelagert sind. Der Fanstator der hinteren Fanstufe ist gesplittet und wird durch ein Leitgitter 34a, das am Eingang des Primärstromkanals 6 ausgebildet ist, und durch ein Leitgitter 34b gebildet, das am Eingang des Sekundärstromkanals 5 ausgebildet ist.

Durch den Fan 3 führt ein Eingangsstromkanal 4, der sich hinter dem Fanrotor 33 der hinteren Stufe ausgehend von einem Splitter 16 in den Primärstromkanal 6 und den Sekundärstromkanal 5 teilt. Der Eingangsstromkanal 4 wird durch einen Ringraum gebildet, der sich stromabwärts des Nasenkonus 35 zwischen einer radial äußeren Strömungspfadbegrenzung 41 und einer radial inneren Strömungspfadbegrenzung 42 erstreckt. Die radial äußere Strömungspfadbegrenzung 41 wird durch das Fangehäuse 20 bzw. daran angrenzende Wandbereiche gebildet. Die radial innere Strömungspfadbegrenzung 42 durch den Annulus der Fan-Scheiben 310, 330 bzw. daran angrenzende nabenseite Begrenzungsflächen gebildet.

Der Ringraum des Eingangsstromkanals 4 weist eine Strömungsmitte 43 auf, die die geometrische Mitte des Eingangsstromkanals 4 zwischen äußerer Strömungspfadbegrenzung 41 und innerer Strömungspfadbegrenzung 42 bildet.

Die beiden Fanrotoren 31, 33 werden über die Niederdruckwelle 82 angetrieben, die mit den Fan-Scheiben 310, 330 gekoppelt ist.

Zwischen den Schaufeln des Fanrotors 31 und den Schaufeln des Fanstators 32 befindet sich ein erster Spalt 91. Zwischen den Schaufeln des Fanstators 32 und den Schaufeln des Fanrotors 33 findet sich ein zweiter Spalt 92. Zwischen den Schaufeln des Fanrotors 33 und den Schaufeln des gesplitteten Fanstators 34a, 34b befindet sich ein dritter Spalt 93, der sich seinerseits in einen radial inneren Spalt 93a und einen radial äußeren Spalt 93b aufteilt. In der Strömungsmitte 43 des Eingangsstromkanals 4 weisen die Schaufeln des Fanrotors 31 der vorderen Stufe eine axiale Länge r1, der erste Spalt 91 eine axiale Länge gr1, die Schaufeln des Fanstators 32 der vorderen Stufe eine axiale Länge s1, der zweite Spalt 92 eine axiale Länge gs1 und die Schaufeln des Fanrotors 33 der hinteren Stufe eine axiale Länge r2 auf.

Zur Realisierung eines geringen Triebwerklärms sind große Abstände gr1 und gs1 vorgesehen, wobei die folgenden Beziehungen gelten: Der axiale Abstand gr1 zwischen den Schaufeln der Fanstators 32 der ersten Stufe zu den Schaufeln des Fanrotors 31 der ersten Stufe beträgt zwischen 60% und 150%, insbesondere zwischen 80% und 130% der axialen Länge r1 der Schaufeln des Fanrotors 31. Weiter beträgt der axiale Abstand gs1 zwischen den Schaufeln der Fanrotors 33 der zweiten Stufe zu den Schaufeln des Fanstators 32 der ersten Stufe zwischen 60% und 150%, insbesondere zwischen 80% und 130% der axialen Länge s1 der Schaufeln des Fanstators 32.

Zur Lärmreduktion sind des Weiteren die folgenden Verhältnisse realisiert. Die Anzahl der Schaufeln des Fanstators 32 der ersten Stufe beträgt das in etwa zweifache bis fünffache, insbesondere in etwa das dreifache der Anzahl der Schaufeln des Fanrotors 31 der ersten Stufe und zwar so ausgeführt, dass ganzzahlige Vielfache zwischen den Anzahlen der Schaufeln vermieden werden. Die Abweichung der Anzahl der Fanstatorschaufeln zum Mehrfachen der vorangehenden Fanrotorschaufeln kann dabei zwischen 1 bis 10, insbesondere zwischen 3 und 6 liegen. Weiter ist die Anzahl der Schaufeln des Fanrotors 33 der zweiten Fanstufe um mindestens 10% bis 40%, insbesondere um 15% bis 25%, insbesondere um 20% erhöht gegenüber der Anzahl der Schaufeln des Fanrotors 31 der ersten Fanstufe.

Weiter kann zur Lärmreduktion vorgesehen sein, dass das Leitgitter 34a am Eingang des Primärstromkanals 6 und das Leitgitter 34b am Eingang des Sekundärstromkanals 5 jeweils eine unterschiedliche Anzahl von Schaufeln verglichen mit der Anzahl der Statorschaufeln und der Rotorschaufeln der stromaufwärts angeordneten Fanrotoren und Fanstatoren aufweisen.

Es wird darauf hingewiesen, dass beim Triebwerk der Figur 1 beide Fanrotoren 31, 33 im Eingangsstromkanal 4 vor dessen Separierung in den Primärstromkanal 6 und den Sekundärstromkanal 5 angeordnet sind. Dies ermöglicht einen kompakten Aufbau des mehrstufigen Fans 3 und des Triebwerks insgesamt. Um einen besonders kompakten Aufbau zu erreichen, kann gemäß einer Ausführungsvariante vorgesehen sein, die beiden Fanrotoren 31, 33 jeweils in BLISK-Bauweise auszuführen, wobei die beiden Rotoren 31, 33 drehfest miteinander verbunden, beispielsweise miteinander verschraubt oder verschweißt sind.

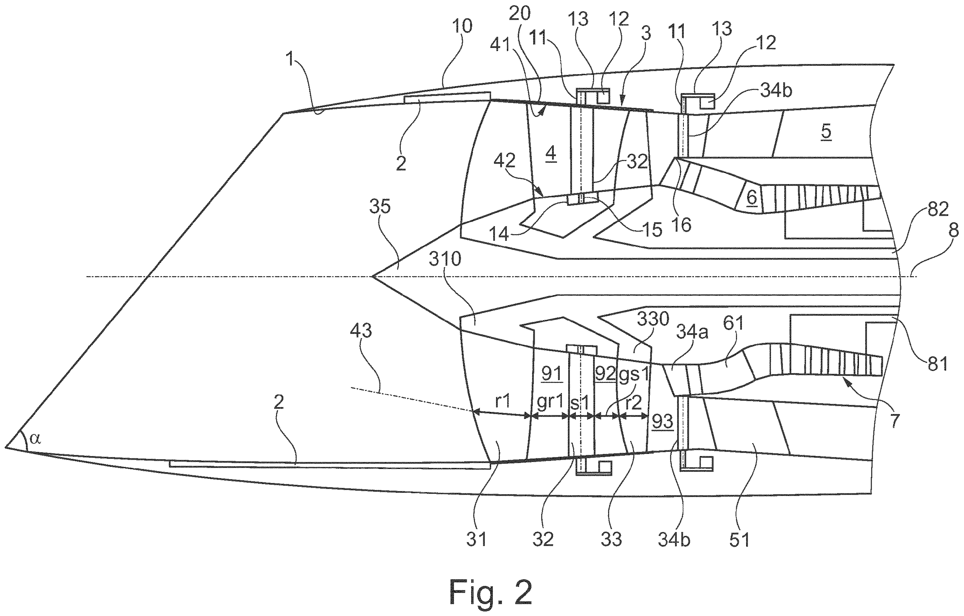

Die Figur 2 zeigt ein Ausführungsbeispiel, dass sich von dem Ausführungsbeispiel der Figur 1 durch den Umstand unterscheidet, dass die Schaufeln des Fanstators 32 der vorderen Stufe und die Schaufeln des Fanstators 34b der hinteren Stufe jeweils um ihre radiale Längsachse verdrehbar ausgebildet sind. Hierzu ist vorgesehen, dass die Statorschaufeln jeweils drehbar gelagert sind, wozu die Schaufeln des Fanstators 32 Lagerungen 11 im Fangehäuse 20 und Lagerungen 15 in einem Haltering 14 aufweisen. Eine Verstellung erfolgt über einen in Umfangsrichtung umlaufenden Verstellring 12, der über Verstellhebel 13 mit den Schaufeln verbunden ist. In entsprechender Weise weisen die Fanschaufeln des Fanstators 34a Lagerungen 11 auf, denen ein Verstellring 12 und Verstellhebel 13 zugeordnet sind.

Durch Drehung der Statorschaufeln 32, 34b kann eine Effizienzsteigerung durch Anpassen der Schaufelstellung an die Betriebsbedingungen erfolgen. Auch kann durch geeignete Schaufelstellung die Pumpgrenze des Verdichters 7 verändert werden.

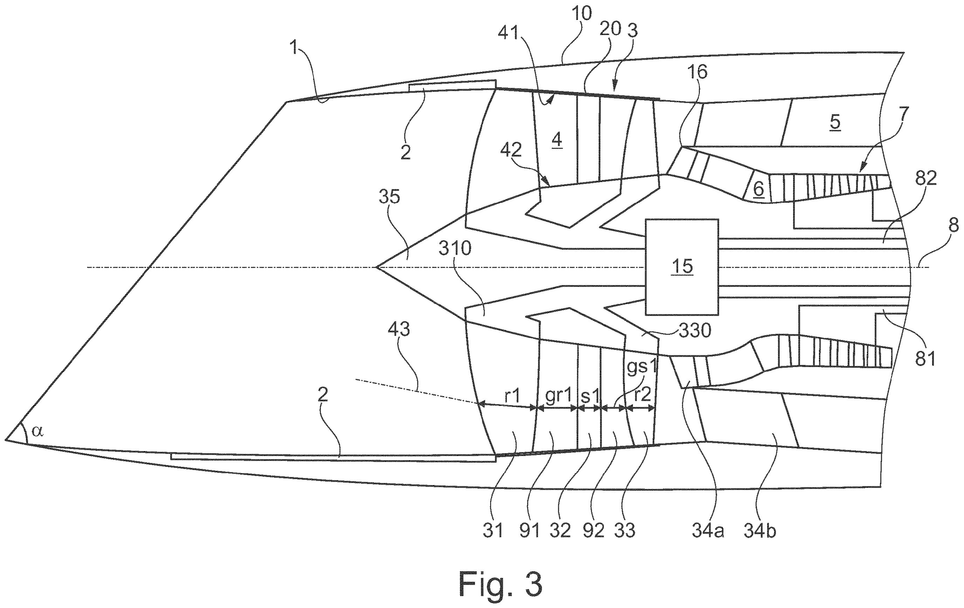

Die Figur 3 zeigt ein Ausführungsbeispiel, dass sich vom Ausführungsbeispiel der Figur 1 dadurch unterscheidet, dass die Niederdruckturbine bzw. die Niederdruckwelle 82 mit dem mehrstufigen Fan 3 über ein Untersetzungsgetriebe 15 gekoppelt ist. Das Untersetzungsgetriebe ist beispielsweise als Planetengetriebe ausgeführt und führt zu einer Reduktion der Fandrehzahl, indem die Drehzahl der schnelllaufenden Niederdruckturbine bzw. der Niederdruckwelle 82 auf den mehrstufigen Fan 3 untersetzt wird.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise kann der mehrstufige Fan statt als zweistufiger Fan als dreistufiger Fan ausgebildet sein. Auch für diesen Fall ist vorgesehen, dass sämtliche Fanrotoren des mehrstufigen Fans 3 im Eingangsstromkanal 4 vor dessen Aufteilung in den Primärstromkanal 6 und den Sekundärstromkanal 5 angeordnet sind, wobei die axialen Abstände der Fanstator- bzw. Fanrotorschaufeln zwischen 60% bis 150%, insbesondere zwischen 80% und 130% der axialen Länge der vorangehenden Fanrotor- bzw. Fanstatorschaufeln liegen können.

## Patentansprüche

1. Turbofan-Triebwerk für ein ziviles Überschallflugzeug, das aufweist:
- einen mehrstufigen Fan (3), wobei jede Stufe des mehrstufigen Fans einen Fanrotor (31, 33) mit Rotorschaufeln und einen Fanstator (32, 34a, 34b) mit Statorschaufeln aufweist,
- einen Eingangsstromkanal (4), der durch den Fanrotor (31) der ersten Stufe des mehrstufigen Fans (3) führt,
- einen Primärstromkanal (6), der durch ein Kerntriebwerk des Turbofan-Triebwerks führt,
- einen Sekundärstromkanal (5), der an dem Kerntriebwerk vorbei führt,
- wobei sich der Eingangsstromkanal (4) in den Primärstromkanal (6) und den Sekundärstromkanal (5) aufteilt, wobei
- die Fanrotoren (31, 33) sämtlicher Stufen des Fans (3) im Eingangsstromkanal (4) vor dessen Aufteilung in den Primärstromkanal (6) und den Sekundärstromkanal (5) angeordnet sind,
**dadurch gekennzeichnet, dass**
- für mindestens zwei Fanstufen gilt, dass die Anzahl der Schaufeln des Fanrotors (33) der hinteren Fanstufe um 10% bis 40%, insbesondere um 15% bis 25%, insbesondere um 20% erhöht ist gegenüber der Anzahl der Schaufeln des Fanrotors (31) der vorderen Fanstufe, und
- die Anzahl der Schaufeln des Fanstators (32, 34a, 34b) einer Fanstufe sich von der Anzahl der Schaufeln des Fanrotors (31, 33) dieser Stufe und von der Anzahl der Statorschaufeln und der Rotorschaufeln jeder vorangehenden Stufe unterscheidet.

2. Turbofan-Triebwerk nach Anspruch 1, **dadurch gekennzeichnet, dass** für mindestens einen Fanrotor oder Fanstator gilt, dass in der radialen Strömungsmitte (43) des Eingangsstromkanals (4) der axiale Abstand (gr1, gs1) zwischen den Schaufeln eines Fanrotors (31, 33) oder Fanstators (32) und den Schaufeln des in Strömungsrichtung unmittelbar stromaufwärts angeordneten Fanstators (32) oder Fanrotors (31) zwischen 60% und 150%, insbesondere zwischen 80% und 130% der axialen Länge der Schaufeln des stromaufwärts angeordneten Fanstators (32) oder Fanrotors (31) beträgt.

3. Turbofan-Triebwerk nach Anspruch 1 oder 2, **dadurch gekennzeichnet, dass** für mindestens eine der Stufen des Fans gilt, dass die Anzahl der Schaufeln des Fanstators (32, 34a, 34b) dieser Stufe das zweifache bis fünffache, insbesondere das dreifache der Anzahl der Schaufeln des Fanrotors (31, 33) dieser Stufe plus oder minus einer Zahl m beträgt, so dass die Anzahl der Schaufeln des Fanrotors (31, 33) und die Anzahl der Schaufeln des Fanstators (32, 34a, 34b) nicht in einem ganzzahligen Verhältnis stehen.

4. Turbofan-Triebwerk nach Anspruch 3, **dadurch gekennzeichnet, dass** die Zahl m zwischen 1 bis 10, insbesondere zwischen 3 und 6 liegt.

5. Turbofan-Triebwerk nach einem der vorangehenden Ansprüche, **dadurch gekennzeichnet, dass** der Fan (3) ein zweistufiger Fan mit einer ersten, vorderen Stufe und einer zweiten, hinteren Stufe ist, wobei die erste Stufe einen ersten Fanrotor (31) und einen ersten Fanstator (32) und die zweite Fanstufe einen zweiten Fanrotor (33) und einen zweiten Fanstator (34a, 34b) aufweist, und wobei der erste Fanrotor (31) und der zweite Fanrotor (33) im Eingangsstromkanal (4) vor dessen Aufteilung in den Primärstromkanal (6) und den Sekundärstromkanal (5) angeordnet sind.

6. Turbofan-Triebwerk nach Anspruch 5, soweit rückbezogen auf Anspruch 2, **dadurch gekennzeichnet, dass** in der radialen Strömungsmitte (43) des Eingangsstromkanals (4) der axiale Abstand (gr1) zwischen den Schaufeln der Fanstators (32) der ersten Stufe zu den Schaufeln des Fanrotors (31) der ersten Stufe zwischen 60% und 150%, insbesondere zwischen 80% und 130% der axialen Länge (r1) der Schaufeln des Fanrotors (31) beträgt und/oder dass in der radialen Strömungsmitte (43) des Eingangsstromkanals (4) der axiale Abstand (gs1) zwischen den Schaufeln des Fanrotors (33) der zweiten Stufe zu den Schaufeln des Fanstators (32) der ersten Stufe zwischen 60% und 150%, insbesondere zwischen 80% und 130% der axialen Länge der Schaufeln des Fanstators (32) beträgt.

7. Turbofan-Triebwerk nach Anspruch 5 oder 6, soweit rückbezogen auf Anspruch 3 oder 4, **dadurch gekennzeichnet, dass** die Anzahl der Schaufeln des Fanstators (32) der ersten Stufe das zweifache bis fünffache, insbesondere das dreifache der Anzahl der Schaufeln des Fanrotors (31) der ersten Stufe plus oder minus einer Zahl m beträgt, so dass die Anzahl der Schaufeln des Fanrotors (31, 33) und die Anzahl der Schaufeln des Fanstators (32, 34a, 34b) nicht in einem ganzzahligen Verhältnis stehen.

8. Turbofan-Triebwerk nach einem der vorangehenden Ansprüche, **dadurch gekennzeichnet,** das sich die Blattspitze an der Einlaufkante der zweiten Rotorstufe (33) des Fans (3) bezogen auf die Maschinenachse zwischen 2% bis 10%, insbesondere zwischen 3% bis 6% radial weiter innen befindet als die Blattspitze an der Einlaufkante der ersten Rotorstufe (31) des Fans (3).

9. Turbofan-Triebwerk nach einem der vorangehenden Ansprüche, **dadurch gekennzeichnet, dass** für mindestens eine Fanstufe gilt, dass die Schaufeln des Fanstators (32, 34b) um ihre radiale Achse drehbar sind.

10. Turbofan-Triebwerk nach einem der vorangehenden Ansprüche, soweit rückbezogen auf Anspruch 5, **dadurch gekennzeichnet, dass** der zweite Fanstator (34a, 34b) durch Statorschaufeln am Anfang des Sekundärstromkanals (5) und Statorschaufeln am Anfang der Primärstromkanals (6) ausgebildet ist.

11. Turbofan-Triebwerk nach einem der vorangehenden Ansprüche, **dadurch gekennzeichnet, dass** ein vor dem mehrstufigen Fan (3) ausgebildeter Treibwerkseinlauf (1) mit einer schallabsorbierenden Auskleidung (2) versehen ist.

12. Turbofan-Triebwerk nach einem der vorangehenden Ansprüche, **dadurch gekennzeichnet, dass** das Triebwerk für einen Geschwindigkeitsbereich von Ma 1,0 bis Ma 3,0, insbesondere von Ma 1,2 bis Ma 1,8 und beim Flugzeugstart für einen Schubbereich von 44.482 N bis 444.820 N, insbesondere für einen Schubbereich von 66.723 N bis 133.446 N ausgelegt ist.

13. Turbofan-Triebwerk nach einem der vorangehenden Ansprüche, **dadurch gekennzeichnet, dass** der Fanrotor (31, 33) aus n miteinander drehfest verbundenen Rotoren in BLISK-Bauweise gebildet ist, wobei n die Anzahl der Stufen des mehrstufigen Fans ist.

14. Turbofan-Triebwerk nach einem der vorangehenden Ansprüche, **dadurch gekennzeichnet, dass** im Antriebsstrang zwischen einer Niederdruckturbine des Triebwerks und dem Fan (3) ein Untersetzungsgetriebe (15) zur Reduktion der Fandrehzahl ausgebildet ist.

## Claims

1. Turbofan engine for a civilian supersonic aircraft, which engine has:
- a multiple-stage fan (3), each stage of the multiple-stage fan having a fan rotor (31, 33) with rotor blades and a fan stator (32, 34a, 34b) with stator blades,
- an inlet flow channel (4) which leads through the fan rotor (31) of the first stage of the multiple-stage fan (3),
- a primary flow channel (6) which leads through a core engine of the turbofan engine,
- a secondary flow channel (5) which leads past the core engine,
- the inlet flow channel (4) being divided into the primary flow channel (6) and the secondary flow channel (5),
- the fan rotors (31, 33) of all the stages of the fan (3) being arranged in the inlet flow channel (4) upstream of the division thereof into the primary flow channel (6) and the secondary flow channel (5),
**characterized in that**
- it is the case for at least two fan stages that the number of blades of the fan rotor (33) of the rear fan stage is increased by from 10% to 40%, in particular by from 15% to 25%, in particular by 20% with respect to the number of blades of the fan rotor (31) of the front fan stage, and
- the number of blades of the fan stator (32, 34a, 34b) of a fan stage differs from the number of blades of the fan rotor (31, 33) of the said stage and from the number of stator blades and the rotor blades of each preceding stage.

2. Turbofan engine according to Claim 1, **characterized in that** it is the case for at least one fan rotor or fan stator that, in the radial flow centre (43) of the inlet flow channel (4), the axial spacing (gr1, gs1) between the blades of a fan rotor (31, 33) or fan stator (32) and the blades of the fan stator (32) or fan rotor (31) which is arranged immediately upstream in the flow direction is between 60% and 150%, in particular between 80% and 130% of the axial length of the blades of the fan stator (32) or fan rotor (31) which is arranged upstream.

3. Turbofan engine according to Claim 1 or 2, **characterized in that** it is the case for at least one of the stages of the fan that the number of blades of the fan stator (32, 34a, 34b) of the said stage is from two times to five times, in particular three times the number of blades of the fan rotor (31, 33) of the said stage plus or minus a number m, with the result that the number of blades of the fan rotor (31, 33) and the number of blades of the fan stator (32, 34a, 34b) are not in an integer ratio.

4. Turbofan engine according to Claim 3, **characterized in that** the number m lies between 1 and 10, in particular between 3 and 6.

5. Turbofan engine according to one of the preceding claims, **characterized in that** the fan (3) is a two-stage fan with a first, front stage and a second, rear stage, the first stage having a first fan rotor (31) and a first fan stator (32), and the second fan stage having a second fan rotor (33) and a second fan stator (34a, 34b), and the first fan rotor (31) and the second fan rotor (33) being arranged in the inlet flow channel (4) upstream of the division thereof into the primary flow channel (6) and the secondary flow channel (5).

6. Turbofan engine according to Claim 5, in so far as it refers back to Claim 2, **characterized in that**, in the radial flow centre (43) of the inlet flow channel (4), the axial spacing (gr1) between the blades of the fan stator (32) of the first stage and the blades of the fan rotor (31) of the first stage is between 60% and 150%, in particular between 80% and 130% of the axial length (r1) of the blades of the fan rotor (31), and/or **in that**, in the radial flow centre (43) of the inlet flow channel (4), the axial spacing (gs1) between the blades of the fan rotor (33) of the second stage and the blades of the fan stator (32) of the first stage is between 60% and 150%, in particular between 80% and 130% of the axial length of the blades of the fan stator (32).

7. Turbofan engine according to Claim 5 or 6, in so far as it refers back to Claim 3 or 4, **characterized in that** the number of blades of the fan stator (32) of the first stage is from two times to five times, in particular three times the number of blades of the fan rotor (31) of the first stage plus or minus a number m, with the result that the number of blades of the fan rotor (31, 33) and the number of blades of the fan stator (32, 34a, 34b) are not in an integer ratio.

8. Turbofan engine according to one of the preceding claims, **characterized in that**, in relation to the machine axis, the blade tip at the inlet edge of the second rotor stage (33) of the fan (3) is situated radially further to the inside by from 2% to 10%, in particular by between 3% and 6%, than the blade tip at the inlet edge of the first rotor stage (31) of the fan (3).

9. Turbofan engine according to one of the preceding claims, **characterized in that** it is the case for at least one fan stage that the blades of the fan stator (32, 34b) can be rotated about their radial axis.

10. Turbofan engine according to one of the preceding claims, in so far as they refer back to Claim 5, **characterized in that** the second fan stator (34a, 34b) is configured by way of stator blades at the start of the secondary flow channel (5) and stator blades at the start of the primary flow channel (6).

11. Turbofan engine according to one of the preceding claims, **characterized in that** an engine inlet (1) which is configured upstream of the multiple-stage fan (3) is provided with a sound-absorbing lining (2).

12. Turbofan engine according to one of the preceding claims, **characterized in that** the engine is designed for a speed range of from Ma 1.0 to Ma 3.0, in particular of from Ma 1.2 to Ma 1.8, and, in the case of the aircraft take-off, for a thrust range of from 44 482 N to 444 820 N, in particular for a thrust range of from 66 723 N to 133 446 N.

13. Turbofan engine according to one of the preceding claims, **characterized in that** the fan rotor (31, 33) is formed from n rotors which are connected to one another fixedly so as to rotate together in a blisk design, n being the number of stages of the multiple-stage fan.

14. Turbofan engine according to one of the preceding claims, **characterized in that** a reduction gear (15) for the reduction of the fan rotational speed is configured in the drive train between a low pressure turbine of the engine and the fan (3).

## Revendications

1. Turbine à double flux pour un avion supersonique civil, comprenant :
- une soufflante à plusieurs étages (3), chaque étage de la soufflante à plusieurs étages comprenant un rotor de soufflante (31, 33) muni d'aubes de rotor et un stator de soufflante (32, 34a, 34b) muni d'aubes de stator,
- un canal de flux d'entrée (4) passant par le rotor de soufflante (31) du premier étage de la soufflante à plusieurs étages (3),
- un canal de flux primaire (6) passant par un réacteur central de la turbine à double flux,
- un canal de flux secondaire (5) passant devant le réacteur central,
- le canal de flux d'entrée (4) étant divisé en un canal de flux primaire (6) et un canal de flux secondaire (5), dans laquelle
- les rotors de soufflante (31, 33) de tous les étages de la soufflante (3) sont disposés dans le canal de flux d'entrée (4) avant sa division en canal de flux primaire (6) et canal de flux secondaire (5), **caractérisée en ce que**
- il est valable pour au moins deux étages de soufflante que le nombre des aubes du rotor de soufflante (33) de l'étage de soufflante arrière soit augmenté de 10 % à 40 %, en particulier de 15 % à 25 %, en particulier de 20 % par rapport au nombre des aubes du rotor de soufflante (31) de l'étage de soufflante avant, et
- que le nombre des aubes du stator de soufflante (32, 34a, 34b) d'un étage de soufflante est différent du nombre des aubes du rotor de soufflante (31, 33) de cet étage et du nombre des aubes de stator et des aubes de rotor de chaque étage précédent.

2. Turbine à double flux selon la revendication 1, **caractérisée en ce qu'**il est valable pour ledit au moins un rotor de soufflante ou stator de soufflante qu'au centre de flux radial (43) du canal de flux d'entrée (4), la distance axiale (gr1, gs1) entre les aubes d'un rotor de soufflante (31, 33) ou d'un stator de soufflante (32) et les aubes du stator de soufflante (32) disposé directement en amont dans le sens du flux ou du rotor de soufflante (31) soit comprise entre 60 % et 150 %, en particulier entre 80 % et 130 %, de la longueur axiale des aubes du stator de soufflante (32) ou du rotor de soufflante (31) disposé en amont.

3. Turbine à double flux selon la revendication 1 ou 2, **caractérisée en ce qu'**il est valable pour au moins l'un des étages de la soufflante que le nombre des aubes du stator de soufflante (32, 34a, 34b) de cet étage soit deux à cinq fois, en particulier trois fois, le nombre des aubes du rotor de soufflante (31, 33) de cet étage plus ou moins un nombre m de sorte que le nombre des aubes du rotor de soufflante (31, 33) et le nombre des aubes du stator de soufflante (32, 34a, 34b) ne sont pas dans un rapport entier.

4. Turbine à double flux selon la revendication 3, **caractérisée en ce que** le nombre m est compris entre 1 et 10, en particulier entre 3 et 6.

5. Turbine à double flux selon l'une quelconque des revendications précédentes, **caractérisée en ce que** la soufflante (3) est une soufflante à deux étages avec un premier étage avant et un deuxième étage arrière, le premier étage comprenant un premier rotor de soufflante (31) et un premier stator de soufflante (32) et le deuxième étage de soufflante comprenant un deuxième rotor de soufflante (33) et un deuxième stator de soufflante (34a, 34b), et le premier rotor de soufflante (31) et le deuxième rotor de soufflante (33) étant disposés dans le canal de flux d'entrée (4) avant sa division en canal de flux primaire (6) et canal de flux secondaire (5).

6. Turbine à double flux selon la revendication 5, lorsqu'elle dépend de la revendication 2, **caractérisée en ce qu'**au centre de flux radial (43) du canal de flux d'entrée (4), la distance axiale (gr1) entre les aubes du stator de soufflante (32) du premier étage et les aubes du rotor de soufflante (31) du premier étage est comprise entre 60 % et 150 %, en particulier entre 80 % et 130 %, de la longueur axiale (r1) des aubes du rotor de soufflante (31) et/ou **en ce qu'**au centre de flux radial (43) du canal de flux d'entrée (4), la distance axiale (gs1) entre les aubes du rotor de soufflante (33) du deuxième étage et les aubes du stator de soufflante (32) du premier étage est comprise entre 60 % et 150 %, en particulier entre 80 % et 130 %, de la longueur axiale des aubes du stator de soufflante (32) .

7. Turbine à double flux selon la revendication 5 ou 6, lorsqu'elle dépend de la revendication 3 ou 4, **caractérisée en ce que** le nombre des aubes du stator de soufflante (32) du premier étage est deux à cinq fois, en particulier trois fois, le nombre des aubes du rotor de soufflante (31) du premier étage plus ou moins un nombre m de sorte que le nombre des aubes du rotor de soufflante (31, 33) et le nombre des aubes du stator de soufflante (32, 34a, 34b) ne sont pas dans un rapport entier.

8. Turbine à double flux selon l'une quelconque des revendications précédentes, **caractérisée en ce que** le bout de pale au niveau du bord d'attaque du deuxième étage de rotor (33) de la soufflante (3) en se référant à l'axe de machine se trouve de 2 % à 10 %, en particulier de 3 % à 6 %, radialement plus à l'intérieur que le bout de pale au niveau du bord d'attaque du premier étage de rotor (31) de la soufflante (3).

9. Turbine à double flux selon l'une quelconque des revendications précédentes, **caractérisée en ce qu'**il est valable pour au moins un étage de soufflante que les aubes du stator de soufflante (32, 34b) puissent tourner autour de leur axe radial.

10. Turbine à double flux selon l'une quelconque des revendications précédentes, lorsqu'elle dépend de la revendication 5, **caractérisée en ce que** le deuxième stator de soufflante (34a, 34b) est réalisé par des aubes de stator au début du canal de flux secondaire (5) et des aubes de stator au début du canal de flux primaire (6).

11. Turbine à double flux selon l'une quelconque des revendications précédentes, **caractérisée en ce qu'**une entrée de réacteur (1) réalisée devant la soufflante à plusieurs étages (3) est munie d'une enveloppe à absorption acoustique (2).

12. Turbine à double flux selon l'une quelconque des revendications précédentes, **caractérisée en ce que** le réacteur est conçu pour une plage de vitesse allant de Ma 1,0 à Ma 3,0, en particulier de Ma 1,2 à Ma 1,8, et est conçu au décollage de l'avion pour une plage de poussée allant de 44482 N à 444820 N, en particulier pour une plage de poussée allant de 66723 N à 133446 N.

13. Turbine à double flux selon l'une quelconque des revendications précédentes, **caractérisée en ce que** le rotor de soufflante (31, 33) est formé de n rotors verrouillés ensemble en rotation dans un modèle de type disque aubagé monobloc, n étant le nombre des étages de la soufflante à plusieurs étages.

14. Turbine à double flux selon l'une quelconque des revendications précédentes, **caractérisée en ce que** dans la chaîne de propulsion, un réducteur (15) est réalisé entre une turbine à basse pression du réacteur et la soufflante (3) pour réduire la vitesse de rotation de la soufflante.
